Europäisches Patentamt

European Patent Office

Office européen des brevets

(11) Veröffentlichungsnummer: **0 070 330**
A2

(12) **EUROPÄISCHE PATENTANMELDUNG**

(21) Anmeldenummer: **81106614.1**

(22) Anmeldetag: **26.08.81**

(51) Int. Cl.³: **B 01 J 8/20**

(30) Priorität: **17.07.81 CH 4707/81**

(43) Veröffentlichungstag der Anmeldung: **26.01.83**
**Patentblatt 83/4**

(84) Benannte Vertragsstaaten: **AT BE CH DE FR GB IT LI LU NL SE**

(71) Anmelder: **GEBRÜDER SULZER AKTIENGESELLSCHAFT, Zürcherstrasse 9, CH-8401 Winterthur (CH)**

(72) Erfinder: **Flaschel, Erwin, Dr., Rte Praz-Veguey 20, CH-1022 Chavannes-Renens (CH)**
Erfinder: **Renken, Albert, Prof. Dr., Chemin des Charmilles 46, CH-1025 St-Sulpice (CH)**

(74) Vertreter: **Dipl.-Ing. H. Marsch Dipl.-Ing. K. Sparing Dipl.-Phys.Dr. W.H. Röhl Patentanwälte, Rethelstrasse 123, D-4000 Düsseldorf (DE)**

(54) **Vorichtung für Flüssig-Feststoff-Wirbelschichten.**

(57) Vorrichtung für Flüssig-Feststoff-Wirbelschichten, die aus einem Reaktor (1) besteht, in dem eine Anzahl von als statische Mischelemente ausgebildete Einbauelemente (2) angeordnet ist. Eine derartige Vorrichtung, die vorzugsweise für die Durchführung von chemischen Reaktionen dient, ermöglicht einen stabilen Betrieb der Flüssig-Feststoff-Wirbelschicht und hohe Feststoffkonzentrationen und weist gute radiale Austauscheigenschaften auf und gewährleistet geringe Rückvermischungen.

0070330

P.5637/Sd/Wh

<u>Gebrüder Sulzer Aktiengesellschaft, Winterthur/Schweiz</u>

<u>Vorrichtung für Flüssig-Feststoff-Wirbelschichten</u>

Die Erfindung betrifft eine Vorrichtung gemäss Oberbegriff von Anspruch 1.

Unter Flüssig-Feststoff-Wirbelschichten werden Wirbelschichten verstanden, in denen eine Flüssigkeit die kontinuierliche Phase bildet und in denen neben Feststoffen auch Gase dispergiert sein können.

Der Einsatz von Flüssig-Feststoff-Wirbelschichten ist von grossem Interesse in der Verfahrenstechnik, insbesondere in der chemischen Reaktionstechnik.

Beispiele hierfür sind Adsorption, Kristallisation, Auflösung von Feststoffen sowie Ionenaustausch, wie beispielsweise in dem Artikel "Mass Transfer to Power Fluids in Fluidized Beds of Large Particles" von S. Kumar und S.N. Upadhyay in "Letters in Heat and Mass Transfer" 7 (1980), S. 199) ausgeführt wird.

Als chemische Reaktoren werden sie bei elektrochemischen Prozessen, z. B. bei der Metallabscheidung aus verdünnten Lösungen wie Ablaugen oder Abwässern eingesetzt (vergl. den Artikel "Reaktions- und verfahrenstechnische Aspekte elektrochemischer Fest- und Wirbelbett-Zellen" von G. Kreysa und E. Heitz in "Chem.-Ing.-Techn." 48 (1976), S. 852).

Ein weiterer Einsatz als chemische Reaktoren besteht in ihrer Anwendung bei chemischen Umsetzungen mit festen suspendierten Katalysatoren, z.B. immobilisierten Enzymen (vergl. den Artikel "Use of Sweetzyme in Industrial Continuous Isomerization" von J. Oestergaard und S.L. Knudsen in "Die Stärke" 28 (1976) 10, S. 350 sowie den Artikel "Experimental Results from a Pilot Plant ..." von R.W. Coughlin, M. Charles und K. Julkowski in "AIChE Symposium Series" 74 (1978) 172, S.40) und bei Fermentationen, z.B. mit fixierten Zellen (vergl. Artikel "Suggested Kinetic Model for the Fluidized-Bed Biofilm Reactor" von W.K. Shieh in "Biotechnology and Bioengineering" 22 (1980), S. 667).

Bei den aufgeführten Verfahren ist die Verweilzeitverteilung der Flüssigkeit und die Konzentration des Feststoffes im System von entscheidender Bedeutung für die Leistung der Flüssig-Feststoff-Wirbelschicht. Der grosstechnischen Anwendung der Flüssig-Feststoff-Wirbelschicht stehen jedoch häufig Probleme der Stabilität entgegen.

Besondere Sorgfalt muss der Konstruktion des Anströmbodens gewidmet werden. Eingesetzt werden speziell angefertigte perforierte Platten, Sandfestbetten, Siebe und dergl. Dennoch lassen sich Kanalbildungen und unerwünschte Rezirkulationen von Flüssigkeit und Feststoff nicht vermeiden, die die Reaktorleistung herabsetzen und einen Dauerbetrieb verhindern (vergl. hierzu den bereits aus der "Die Stärke" zitierten Artikel).

Aehnliche Instabilitäten wurden bereits 1962 bei Untersuchungen von Flüssig-Feststoff-Wirbelschichten mitgeteilt (vergl. den Artikel "The Longitudinal Dispersion of Liquid in a Fluidised Bed" von H. Kramers, M.D. Westermann, J.H. de Groot, F.A.A. Dupont in "Interaction between Fluids and Particles "

(London: Inst. Chem. Engrs.) (1962), S. 114).

Reproduzierbare Untersuchungen an einer 6 m bzw. 12 m hohen Wirbelschicht mit 25,7 und 35,3 mm Durchmesser waren nur unter Vermeidung jeglicher Störungen im System, beispielsweise Flansche und einer exakten senkrechten Montage möglich. Trotz dieser Vorkehrungen wurden Inhomogenitäten im Reaktor beobachtet. So war z.B. die Feststoffverteilung nicht über der gesamten Länge konstant.

Die vorstehend angegebenen Schwierigkeiten werden mit zunehmendem Durchmesser des Reaktors und mit abnehmender Flüssigkeitsgeschwindigkeit grösser.

Kleine lineare Geschwindigkeiten der Flüssigkeit müssen jedoch eingestellt werden, wenn eine hohe Feststoffkonzentration und damit z.B. eine hohe Katalysatorkonzentration gefordert wird, wenn kleine Partikel eingesetzt werden müssen, und wenn die Dichteunterschiede zwischen Flüssigkeit und Feststoff gering sind.

Um die axiale Dispersion in den Flüssig-Feststoff-Wirbelschichten zu verringern, wurde schon vorgeschlagen, Metallfedern in den Reaktor zu spannen (vergl. hierzu Artikel "Axial Dispersion of Liquids in Fluidized Beds/Effect of Internals" von A.B. Burli, P.R. Senthilnathan und N. Subramanian in "The Canadian Journal of Chem. Eng." Vol. 57, October 1979, S. 648).Die parallel eingespannten Federn unterteilen den Reaktionsraum, so dass eine Verringerung der Rückvermischung zu beobachten war. Der Grund für die Abnahme der axialen Flüssigkeitsdispersion ist in einer Vereinheitlichung des Geschwindigkeitsprofils zu sehen, da die parallel aufgespannten Federn ähnlich wie Rohrbündel den Flüssigkeitsstrom in die axiale Richtung zwingen. Quervermischung und somit Ausgleich von örtlichen Inhomogenitäten werden so erschwert. Dies kann unter anderem zu unerwünschten radialen Konzentrations- und Temperaturprofilen führen, vor allem bei stark exothermen oder endothermen Prozessen. Die aufgespannten Federn haben nur einen sehr geringen Einfluss auf die Konzentration des Feststoffes in der Wirbelschicht.

Das Problem, eine Flüssig-Feststoff-Wirbelschicht stabil zu betreiben, hohe Feststoffkonzentrationen,gute radiale Austauscheigenschaften und geringe Rückvermischungen zu gewährleisten, wird erfindungsgemäss mit Hilfe der im Kennzeichen des Anspruchs 1 angegebenen Mittel gelöst.

Bekanntlich erfolgt die Homogenisierung bei statischen Mischern durch feststehende Einbauten unter Nutzung der Strömungsenergie der zu mischenden Komponenten (Flüssig-Flüssig, Gas-Gas, Flüssig-Gas) (vergl. hierzu den Artikel "Statische Mischer und ihre Anwendung" von M.H. Pahl und E. Muschelknautz in "Chem.-Ing.-Tech." 52 (1980) 4, Seite 285).

Bekanntlich bewirken statische Mischer eine homogene Verteilung der Komponenten sowie eine einheitliche Verweilzeit derselben. Dies führt zu einer Erhöhung der Leistung des als chemischen Reaktor eingesetzten statischen Mischers.

Die Erfindung beruht auf der Erkenntnis, dass diese positiven Eigenschaften auch in Systemen mit Flüssigkeiten und darin suspendiertem Feststoff erhalten bleiben. Zudem zeigte es sich entgegen allen Erwartungen, dass bei gleichen linearen Strömungsgeschwindigkeiten der Feststoffgehalt erheblich gesteigert werden kann. Es kann darüber hinaus unter Bedingungen gearbeitet werden, die bei einer normalen Wirbelschicht zu einem vollständigen Austrag des Feststoffes führen würden.

Hierdurch lässt sich bei heterogen - katalytischen Reaktoren die Katalysatorkonzentration erhöhen und/oder es können Katalysatorpartikel mit kleinerem Durchmesser, damit grösserer spezifischer äusserer Oberfläche und kleinerem internen Diffusionswiderstand eingesetzt werden. Beides trägt zu einer erhöhten Reaktorleistung und bei komplexen Reaktionen zu einer Selektivitätsverbesserung bei.

Die durch Einbauten bewirkte Quervermischung stabilisiert zudem die Flüssig-Feststoff-Wirbelschicht, so dass keine erhöhten Anforderungen an den Anströmboden und den Aufbau der Anlage gestellt werden müssen. Die Feststoffverteilung ist homogen und das Verhalten der Flüssig-Feststoff-Wirbelschicht reproduzierbar.

Das beschriebene Verhalten bleibt grundsätzlich bestehen, wenn die Flüssig-Feststoff-Wirbelschicht im Gegenstrom betrieben wird, oder als dritte Phase ein Gas zugeführt wird.

Eine Anzahl von statischen Mischern, die zur Erreichung der obengenannten Ziele eingesetzt werden können, sind in der vorstehend zitierten Veröffentlichung ("Chem.-Ing.-Tech." 52 (1980)) beschrieben. Als besonders geeignet haben sich Mischertypen erwiesen, wie sie aus der DE-OS 29 43 688 und aus der DE-PS 22 05 371 bekannt sind.

Im folgenden seien die Mischertypen aus der DE-OS mit "I" und die Mischertypen aus der DE-PS mit "II" bezeichnet.

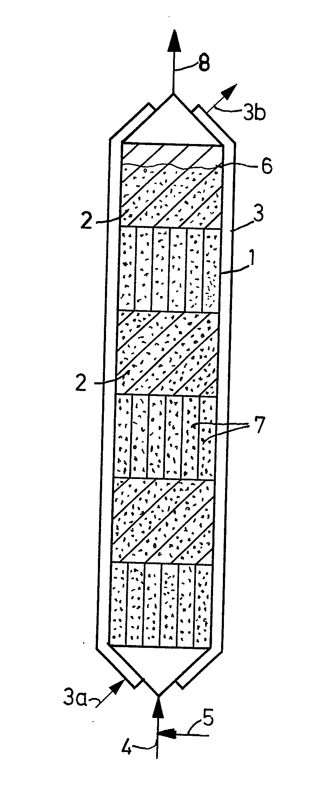

Die Erfindung wird nachstehend anhand eines in der Zeichnung dargestellten Ausführungsbeispiels erläutert.

Die Zeichnung zeigt in schematischer Darstellungsweise in einem Längsschnitt eine Vorrichtung 1 für Flüssig-Feststoff-Wirbelschichten mit sechs übereinander angeordneten Einbauelementen 2, die jeweils gegeneinander um $90^{\circ}$ verschwenkt angeordnet sind.

Der Reaktor 1 ist von einem Doppelmantel 3 umgeben, in welchen je nachdem wie es die durchzuführende Reaktion verlangt, über eine Zuleitung 3a ein Heiz- oder Kältemittel
eingespeist und durch eine Leitung 3b entnommen wird.

Ueber eine Leitung 4 wird kontinuierlich eine Flüssigkeit
in den Reaktor eingeleitet, in welchem sich mit dem durch
Leitung 5 anfänglich zugeführten Feststoff eine bis zu dem
Niveau 6 reichende Wirbelschicht ausbildet. Die Feststoffpartikelchen sind mit der Bezugsziffer 7 bezeichnet.

Mittels der Leitung 8 wird die Flüssigkeit kontinuierlich
aus dem Reaktor 1 abgeführt.

Im folgenden werden einige Zahlenbeispiele angegeben.

Beispiel 1

Verwendet wird eine Flüssig-Feststoff-Wirbelschicht in einem Rohr von 2800 mm Länge und 40 mm innerem Durchmesser
ohne und mit Einbauelementen vom Typ I. Die Flüssigkeit hat
eine dynamische Viskosität von $5,75.10^{-3}$ Pa s und eine Dichte von ca. 1 g/cm$^3$. Der eingesetzte Feststoff hat einen mittleren Teilchendurchmesser von 0,14 mm und eine scheinbare
Dichte von 1,47 g/cm$^3$. Die Teilchen sind unregelmässig geformt und porös. Bei einem Durchsatz von 3 kg/h beträgt der
Feststoffanteil ohne Einbauelemente 32 %, mit Einbauelementen des Typs I 44 %. Bei einem Durchsatz von 14 kg/h ergeben
sich 7 % bzw. 21 % Feststoffanteil. Der maximale Feststoffgehalt ohne Flüssigkeitsströmung (Festbett) ergibt sich zu
53 %. Der Arbeitsbereich der Wirbelschicht ohne Einbauelemente erstreckt sich bis zu einem Durchsatz von 20 kg/h, danach erfolgt Austrag des Feststoffes. Demgegenüber wird der Arbeitsbereich mit Einbauelementen des Typs I bis zu einem Durchsatz von 42 kg/h ausgedehnt.

Beispiel 2

Es wird eine Anordnung wie in Beispiel 1 verwendet. Die in die Flüssig-Feststoff-Wirbelschicht eingebrachten Einbauelemente sind jedoch vom Typ II. Bei einem Flüssigkeitsdurchsatz von 3 kg/h ergibt sich dann ein Feststoffgehalt von 44 %, bei 14 kg/h ein solcher von 25 %. Der Arbeitsbereich der Wirbelschicht kann bis auf einen Durchsatz von 65 kg/h, d.h. auf das 3,25-fache im Vergleich zu einer herkömmlichen Wirbelschicht ausgedehnt werden.

Beispiel 3

Wesentlich für die Leistungsfähigkeit eines chemischen Reaktors ist der Grad der Rückvermischung in der kontinuierlichen Phase. In der beschriebenen Anlage wurden daher Messungen zur axialen Dispersion durchgeführt. Die Messungen erfolgten über die Bestimmung der Verweilzeitverteilung eines Indikators an zwei 1590 mm auseinander liegenden Messstellen. Zur Berechnung des die axiale Dispersion charakterisierenden Parameters $Bo = u_o \cdot L/D_{ax}$ wurde das herkömmliche Dispersionsmodell für offene Systeme eingesetzt. Hierbei bedeuten

$Bo$ die Bodensteinzahl (-)

$D_{ax}$ den axialen Dispersionskoeffizienten $(\frac{m^2}{s})$

$u_o$ die lineare Strömungsgeschwindigkeit $(\frac{m}{s})$

und $L$ die Länge der Messstrecke (m)

Es wurden die folgenden tabellarisch aufgeführten Werte in Abhängigkeit vom Feststoffgehalt in der Wirbelschicht mit und ohne Einbauelemente ermittelt:

| Feststoffgehalt (%) | 40 | 30 | 20 | 10 |
|---|---|---|---|---|
| Wirbelschicht ohne Einbauelemente Bo | < 1 | 2,8 | 5,8 | 11,1 |
| Wirbelschicht mit Einbauelementen Typ II   Bo | 4,7 | 14,4 | 28,0 | 51,3 |
| Wirbelschicht mit Einbauelementen Typ I    Bo | 7,2 | 17,5 | 32,1 | 57,1 |

Die Zahlen in der Tabelle zeigen, dass bei der Verwendung von Einbauelementen die Bodensteinzahl Bo wesentlich grösser und somit der Grad der Rückvermischung wesentlich kleiner ist.

Beispiel 4

Es wird eine Anordnung wie in Beispiel 1 verwendet. Der Reaktor wird ohne sowie mit Einbauelementen vom Typ I verwendet. Am Eingang 1 werden eine Flüssigkeit und über eine Fritte gleichzeitig Gas eingegeben. Der eingesetzte Feststoff entspricht dem aus Beispiel 1. Die Flüssigkeit hat eine dynamische Viskosität vom $10^{-2}$ Pa s und eine Dichte von ca. 1 $g/cm^3$.

Im Reaktor ohne Einbauelemente und einem Durchsatz von 1,2 kg/h Flüssigkeit beträgt der Feststoffanteil 39 %. Er verringert sich auf 35 %, wenn gleichzeitig 4 l/h Gas zugeführt werden.

Im Reaktor mit Einbauelementen wird ein Feststoffanteil von 39 % bei dem Flüssigkeitsdurchsatz von 2 kg/h erhalten. Durch Zusatz von 4 l/h Gas verringert er sich auf 34 %.

Patentansprüche

1. Vorrichtung für Flüssig-Feststoff-Wirbelschichten,in welcher Einbauelemente angeordnet sind, dadurch g e - k e n n z e i c h n e t , dass die zur Stabilisierung der Strömung dienenden Einbauelemente statische Mischelemente sind.

2. Vorrichtung nach Anspruch 1, dadurch gekennzeichnet, dass die im Mantelrohr der Vorrichtung angeordneten statischen Mischelemente aus mehreren parallel zur Achse des Mantelrohres liegenden, sich berührenden ebenen La- gen bestehen, die querschnittsausfüllend eingesetzt/, wobei jede der ebenen Lagen im wesentlichen schräg zur Längsrichtung des Mantelrohres sich erstreckende, geradlinige Strömungskanäle aufweist und wobei die Strömungskanäle in jeder Lage mindestens gruppenweise im wesentlichen gleichgerichtet zueinander verlaufen und weiterhin die Strömungskanäle zweier benachbarter Lagen sich kreuzen und im Bereich der Kreuzungsstellen mindestens teilweise gegeneinander geöffnet und aufeinanderfolgende statische Mischelemente um einen Winkel, von vorzugswei- se 90$^{\mathrm{o}}$, um die Rohrachse verschwenkt sind.

3. Vorrichtung nach Anspruch 1, dadurch gekennzeichnet, dass die im Mantelrohr der Vorrichtung angeordneten statischen Mischelemente aus sich kreuzenden Stegen bestehen, die einen Winkel gegenüber der Rohrachse aufweisen, wobei die Stege der statischen Mischelemente in mindestens zwei Gruppen angeordnet sind und die Stege innerhalb einer jeden Gruppe im wesentlichen parallel gerichtet sind und sich die Stege der einen Gruppe mit den Stegen der anderen Gruppe kreuzen, und aufeinanderfolgende statische Mischelemente gegeneinander um einen Winkel, von vorzugs- weise 90$^{\mathrm{o}}$, um die Rohrachse verschwenkt sind.